(19) Europäisches Patentamt
European Patent Office
Office européen des brevets

(11) EP 4 423 012 B1

(12) **EUROPEAN PATENT SPECIFICATION**

(45) Date of publication and mention of the grant of the patent:
**01.04.2026 Bulletin 2026/14**

(21) Application number: **22800700.1**

(22) Date of filing: **17.10.2022**

(51) International Patent Classification (IPC):
***C01B 33/18*** *(2006.01)* ***B60C 1/00*** *(2006.01)*
***C01B 33/193*** *(2006.01)* ***C08K 3/36*** *(2006.01)*

(52) Cooperative Patent Classification (CPC):
**C01B 33/193; B60C 1/00; B60C 1/0016; C01B 33/18;** C01P 2006/12; C08K 3/36; C08K 2201/006

(86) International application number:
**PCT/EP2022/078858**

(87) International publication number:
**WO 2023/072666 (04.05.2023 Gazette 2023/18)**

(54) **PRECIPITATED SILICA, PROCESS FOR PRODUCTION THEREOF AND USE THEREOF**

FÄLLUNGSKIESELSÄURE, VERFAHREN ZU IHRER HERSTELLUNG UND VERWENDUNG DAVON

ACIDE SILICILIQUE PRÉCIPITÉ, SON PROCÉDÉ DE PRODUCTION ET SON UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.10.2021 EP 21204753**

(43) Date of publication of application:
**04.09.2024 Bulletin 2024/36**

(73) Proprietor: **Evonik Operations GmbH**
**45128 Essen (DE)**

(72) Inventors:
- **OCHENDUSZKO, Agnieszka**
  **9532 Rickenbach (CH)**
- **WEHMEIER, Andre**
  **53332 Bornheim (DE)**
- **LAMANN, Rainer**
  **50126 Bergheim (DE)**
- **PANZ, Christian**
  **50389 Wesseling-Berzdorf (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**EP-A2- 1 764 344** **WO-A1-2004/014795**
**WO-A1-2004/014797** **WO-A1-2004/065299**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 423 012 B1

## Description

The invention relates to precipitated silica, to a process for production thereof and to the use thereof.

EP 1585704 discloses precipitated silicas having the following physicochemical parameters:

| | |
|---|---|
| CTAB surface area | 100 - 160 $m^2/g$, |
| BET surface area | 100 - 190 $m^2/g$, |
| DBP number | 180 - 300 g/(100 g), |
| Sears number $V_2$ | 15 - 28 ml/(5 g), |
| Moisture content | 4 - 8 %. |

They are produced at a constant AV (alkali value).

In addition, EP 1764344 discloses precipitated silicas having the following physicochemical parameters:

| | |
|---|---|
| Relative breadth y of pore size distribution | 4.0 to 10.0 (g nm)/ml, |
| BET surface area | 90 to 320 $m^2/g$, |
| CTAB surface area | 100 to 200 $m^2/g$, |
| Sears number $V_2$ | 25 to 40 ml/(5 g), |
| Sears number $V_2$/CTAB ratio | 0.16 to 0.28 ml/(5 $m^2$) |

and the use thereof in rubber mixtures.

EP 2473443 discloses a process for producing precipitated silicas, comprising the reaction of a silicate with an acidifying agent, which affords a silica suspension, then the separation and drying of that suspension, wherein the reaction of the silicate with the acidifying agent is conducted in the following manner:

(i) forming an aqueous initial charge having a pH between 2 and 5,
(ii) simultaneously adding silicate and acidifying agent to the initial charge in such a way that the pH of the reaction medium is kept between 2 and 5,
(iii) adjusting the addition of the acidifying agent, with continuation of the addition of silica to the reaction medium until a pH of the reaction medium between 7 and 10 is obtained,
(iv) simultaneously adding silicate and acidifying agent to the reaction medium in such a way that the pH of the reaction medium is kept between 7 and 10,
(v) adjusting the addition of the silicate, with continuation of the addition of the acidifying agent to the reaction medium until a pH of the reaction medium between 2.5 and 5.3 is obtained,
(vi) contacting the reaction medium with acidifying agent and silicate in such a way that the pH of the reaction medium is kept between 2.5 and 5.3,
(vii) adding an alkaline active ingredient, preferably a silicate, to the resultant reaction medium, in order thus to increase the pH of the reaction medium to a value between 4.7 and 6.3, this step (vii) being optional if a reaction medium having a pH between 5.0 and 5.3 is contacted in step (vi) with acidifying agent and silicate, such that the pH of the reaction medium is kept between 5.0 and 5.3.

Also known from EP 2794479 B1 is a process for producing silica, in which a silicate is reacted with at least one acid, which affords a suspension of silica, and this suspension is then separated and dried, by performing the reaction of the silicate with the acid according to the following successive steps:

(i) an aqueous initial charge having a pH between 2 and 5 is formed,
(ii) silicate and acid are added simultaneously to the initial charge in such a way that the pH of the reaction medium is kept between 2 and 5,
(iii) the addition of the acid is ceased and the addition of silica to the reaction medium is simultaneously continued until a pH of the reaction medium between 7 and 10 is obtained,
(iv) silicate and acid are added simultaneously to the reaction medium in such a way that the pH of the reaction medium is kept between 7 and 10,
(v) the addition of the silicate is ceased and the addition of acid to the reaction medium is simultaneously continued until a pH of the reaction medium of less than 6 is obtained,

wherein, in step (ii), the acid used after the attainment of the gel point in the reaction medium is a concentrated acid from the group consisting of sulfuric acid having a concentration of at least 80% by mass, acetic acid or formic acid having a concentration of at least 90% by mass, nitric acid having a concentration of at least 60% by mass, phosphoric acid having a concentration of at least 75% by mass, and hydrochloric acid having a concentration of 30% by mass.

US 2017/0044020 A1 discloses precipitated silicas having:

a BET surface area between 45 and 550 $m^2/g$,
a CTAB surface area between 40 and 525 $m^2/g$,
a content (C) of polycarboxylic acid and corresponding carboxylates, expressed as the total carbon content, of at least 0.15% by weight and
a pore distribution range Idp of greater than 0.65.

EP 1764344 B1 discloses a precipitated silica having the following physicochemical parameters:

| | |
|---|---|
| relative breadth $\gamma$ of the pore size distribution | 4.0 - 10.0 (g nm)/ml, |
| BET surface area | 90 - 320 $m^2/g$, |
| CTAB surface area | 100 - 200 $m^2/g$, |
| Sears number $V_2$ | 25 - 40 ml/(5g), |
| Sears number $V_2$/CTAB ratio | 0.16 - 0.28 ml/(5 $m^2$). |

Precipitated silica is also disclosed in WO2004014797, WO2004014795 and WO2004065299.

A particular disadvantage of the known silicas is the limited dispersibility of silicas of relatively high surface area (over and above specific surface areas of about 150 $m^2/g$) in particular so-called green tyre mixtures, as a result of which it is not possible to optimize the reinforcement properties in a typical tyre tread mixture. This means that the full reinforcement potential of such silicas cannot be fully exploited for lack of optimal dispersibility. Even though such silicas are supposed to impart very good abrasion resistance to a tyre tread compound reinforced therewith, this is achieved only partly or incompletely.

The problem addressed by the present invention is that of providing silicas that have advantages in dispersibility and reinforcement characteristics over the silicas known from the prior art. It should thus be possible to establish a prolonged lifetime for a tyre on account of lower wear, i.e. optimized abrasion resistance, without adversely affecting other properties of the tyre.

The invention provides precipitated silicas characterized by the following physicochemical parameters:

CTAB 50 $m^2/g$ - 450 $m^2/g$, preferably 140 $m^2/g$ - 450 $m^2/g$, more preferably 150 $m^2/g$ - 350 $m^2/g$, and especially preferably 180 $m^2/g$ - 330 $m^2/g$,
BET/CTAB ratio < 1.3, preferably 0.8 - 1.2, more preferably 0.9 - 1.2, and especially preferably 0.9 - 1.1,
tailing factor 5% $\geq$ 150 nm, preferably 150 - 1000 nm, more preferably 170 - 500 nm, especially preferably 175 - 400 nm.

The Sears number $V_2$ of the precipitated silicas according to the invention may be 5 - 15 ml/(1.5 g), preferably 8 - 12 ml/(1.5 g), more preferably 10 -12 ml/(1.5 g).

The Ro-Tap value > 300 $\mu$m of the precipitated silicas according to the invention may be > 75% by weight, preferably > 80% by weight, more preferably > 85% by weight.

The precipitated silicas according to the invention may be used in compacted form and more preferably in pellet form. It is possible here for at least 50% of the granule grains resulting from the Ro-Tap > 300 $\mu$m fraction to have a longest dimension of a granule grain (defined as "grain length") in terms of height, width or length of not less than 1.0 mm, preferably > 1.5 mm, more preferably > 2.5 mm, especially preferably > 3.0 mm. Grain length is measured with a Keyence VR-5200 3D profilometer.

In order to achieve ideal, relatively dense packing of the aggregates or agglomerates with intrinsic stabilization, a particular ratio of relatively coarse and relatively small aggregates or agglomerates should be established. The denser the packing, the higher the interaction of these particles with one another, and the more stable the packing. The proportion of coarse particles can be described via the breadth of the distribution function at an abscissa value of the particle size distribution by means of CPS at height 5%. This value is expressed as a ratio to the peak maximum of the particle size distribution and multiplied by the $d_{95}$ value. This tailing factor 5% thus describes the desired asymmetry of the particle size distribution. This creates a stabilized intrinsic starting structure which is barely destroyed during the mixing operation, for example in rubber mixtures, even at high shear forces, and hence generates additional reinforcement of the rubber matrix. By limiting the proportion of coarse particles, dispersibility is not worsened in such a way as to have adverse effects on abrasion resistance.

The present invention further provides a process for producing the silica according to the invention, which is characterized in that

a) an initial charge is created at a temperature of 60°C to 90°C by adding $H_2SO_4$ to water until a pH of less than 4 is established,
b) waterglass and $H_2SO_4$ are simultaneously added to the initial charge at a pH of less than 4, using 3-55% of the total amount of the waterglass,
c) the metered addition of $H_2SO_4$ is stopped,
d) metered addition of waterglass is continued until a pH of 3-9 is established, then the addition of waterglass is stopped,
e) the suspension is subjected to ageing by stirring for a further 5-90 min without further addition of $H_2SO_4$ or waterglass,
f) waterglass and $H_2SO_4$ are metered in simultaneously, with the pH of the suspension greater than 8,
g) the metered addition of waterglass is stopped after the entire amount of water glass has been added,
h) metered addition of $H_2SO_4$ is continued until a pH of less than 5 is attained, then the addition of $H_2SO_4$ is stopped,
i) the suspension is filtered and dried,

wherein waterglass having an $SiO_2$ content of greater than 20% by weight and $H_2SO_4$ having a concentration of greater than 90% by weight are used, and stirring is permanent in process steps a) to h).

Rather than $H_2SO_4$, it is also possible to use other acids, for example HCl or $CO_2$.

The present invention further provides a further process for producing the silica according to the invention, which is characterized in that

a) an initial charge is created by addition of 5-50% by weight of the total amount of waterglass to water at a temperature of 45°C to 90°C,
b) $H_2SO_4$ is added until a pH of less than 3 is attained, then the addition of $H_2SO_4$ is stopped,
c) the suspension is subjected to ageing by stirring for a further 5-90 min without further addition of $H_2SO_4$ or waterglass,
d) waterglass is metered in until a pH of 3-9 is established, then the addition of waterglass is stopped,
e) the suspension is subjected to ageing by stirring for a further 5-90 min without further addition of $H_2SO_4$ or waterglass,
f) then 5-50% by weight of the total amount of waterglass is added, then the addition of waterglass is stopped.
g) the suspension is subjected to ageing by stirring for a further 5-90 min without further addition of $H_2SO_4$ or waterglass,
h) $H_2SO_4$ is added until a pH of less than 3 is attained, then the addition of $H_2SO_4$ is stopped,
i) the suspension is subjected to ageing by stirring for a further 5-90 min without further addition of $H_2SO_4$ or waterglass,
j) waterglass is metered in up to a pH of 3-9, then the addition of waterglass is stopped,
k) the suspension is subjected to ageing by stirring for a further 5-90 min without further addition of $H_2SO_4$ or waterglass,
l) then the residual amount of waterglass is added, then the waterglass addition is stopped,
m) the suspension is subjected to ageing by stirring for a further 5-90 min without further addition of $H_2SO_4$ or waterglass,
n) $H_2SO_4$ is added until a pH of 7.5-9.0 is attained, then the addition of $H_2SO_4$ is stopped,
o) the suspension is optionally heated up to 85 to 95°C,
p) the suspension is subjected to ageing by stirring for a further 5-90 min without further addition of $H_2SO_4$ or waterglass,
q) $H_2SO_4$ is added until a pH of less than 5 is attained, then the addition of $H_2SO_4$ is stopped,
r) the suspension is filtered and dried,

wherein waterglass having an $SiO_2$ content of greater than 20% by weight and $H_2SO_4$ having a concentration of greater than 90% by weight are used, and stirring is permanent in process steps a) to g).

The filtered and dried silica from process step r) may be pelletized or ground and then pelletized.

The suspension from processed r) may be dried in a spray dryer, for example in a spray dryer designed as a nozzle tower or in a spin-flash dryer.

The waterglass may have a weight modulus greater than 2.8.

Rather than $H_2SO_4$, it is also possible to use other acids, for example HCl or $CO_2$.

The invention further provides for the use of the silicas according to the invention in rubber mixtures, battery separators foils, silicone rubber mixtures, pharmaceutical applications, dental applications and cosmetic applications.

The invention further provides for the use of the silicas according to the invention as reinforcing agent, carrier, flatting agent and free-flow auxiliary.

The invention further provides rubber mixtures which are characterized in that they comprise at least one rubber and at least one precipitated silica according to the invention.

The rubber mixture according to the invention may comprise a bifunctional silane. The bifunctional silane may be a sulfur silane, vinyltriethoxysilane, vinyltrimethoxysilane, 3-glycidyloxypropyltriethoxysilane, 3-glycidyloxypropyltrimethoxysilane, 3-methacryloyloxypropyltriethoxysilane or methacryloyloxypropyltrimethoxysilane.

The sulfur silane may be a sulfur silane of the formula (I)

$$[(RO)_3Si\text{-}R^3\text{-}]_nA \qquad (I)$$

with R being the same or different and being a straight-chain unsubstituted or branched unsubstituted ($C_1$-$C_{10}$)-alkyl, preferably ($C_1$-$C_6$)-alkyl, more preferably methyl or ethyl, group or an alkyl polyether group -$(R^1\text{-}O)_m\text{-}R^2$, where $R^1$ is the same or different and is a branched or unbranched, saturated or unsaturated, aliphatic divalent $C_1$-$C_{30}$ hydrocarbon group, m is on average 1 to 30, and $R^2$ is an unsubstituted or substituted, branched or unbranched, monovalent $C_1$-$C_{30}$-alkyl, $C_2$-$C_{30}$- alkenyl, $C_6$-$C_{30}$-aryl or $C_7$-$C_{30}$-aralkyl group, $R^3$ being a branched or unbranched, saturated or unsaturated, aliphatic, aromatic or mixed aliphatic/aromatic divalent $C_1$-$C_{30}$ hydrocarbon group, A being $S_x$ with x = 1-10 when n = 2, and A being SH, SC(=O)R or SCN when n = 1. The sulfur silane may preferably be bis[3-triethoxysilyl)propyl]tetrasulfide, bis[3-triethoxysilyl)propyl]disulfide, 3-mercaptopropyltriethoxysilane, $(EtO)_3Si\text{-}(CH_2)_3\text{-}S\text{-}C(O)\text{-}C_7H_{15}$, $(EtO)_3Si\text{-}(CH_2)_3\text{-}SCN$, $(C_{13}H_{27}(OCH_2CH_2)_5\text{-}O\text{-})_2(CH_3O)Si\text{-}(CH_2)_3\text{-}SH$ or $(C_{13}H_{27}(OCH_2CH_2)_5\text{-}O\text{-})_2(C_2H_5O)Si\text{-}(CH_2)_3\text{-}SH$.

The rubber mixture, apart from the silica according to the invention, may also contain further fillers.

Fillers usable for the rubber mixtures according to the invention include the following fillers:

- Carbon blacks: The carbon blacks to be used here may be produced by the lamp black process, furnace black process, gas black process or thermal black process. The carbon blacks may also be obtained from recycling methods. The carbon blacks may have a BET surface area of 20 to 200 $m^2/g$. The carbon blacks may optionally also be doped, for example with Si.

- Amorphous silicas, preferably precipitated silicas or formed silicas. The amorphous silicas may have a specific surface area of 5 to 1000 $m^2/g$, preferably 20 to 400 $m^2/g$ (BET surface area) and a primary particle size of 10 to 400 nm. The silicas may optionally also be in the form of mixed oxides with other metal oxides, such as oxides of Al, Mg, Ca, Ba, Zn and titanium.

- Synthetic silicates, such as aluminium silicate or alkaline earth silicates, for example magnesium silicate or calcium silicate. The synthetic silicates having BET surface areas of 20 to 400 $m^2/g$ and primary particle diameters of 10 to 400 nm.

- Synthetic or natural aluminium oxides and hydroxides.

- Natural silicates, such as kaolin and other naturally occurring silicas.

- Glass fibres and glass-fibre products (mats, strands) or glass microbeads.

It is possible with preference to use amorphous silicas, more preferably precipitated silicas or silicates, especially preferably precipitated silicas having a BET surface area of 20 to 400 $m^2/g$ in amounts of 5 to 180 parts by weight in each case based on 100 parts of rubber.

The fillers mentioned may be used alone or in a mixture.

In a particularly preferred execution of the process, it is possible to use 10 to 180 parts by weight of precipitated silica according to the invention, optionally together with 0 to 100 parts by weight of carbon black, and 0.1 to 20 parts by weight of silane, based in each case on 100 parts by weight of rubber, for production of the mixtures.

Synthetic rubbers as well as natural rubber are suitable for producing the rubber mixtures according to the invention. Preferred synthetic rubbers are described for example in W. Hofmann, Kautschuktechnologie [Rubber Technology], Genter Verlag, Stuttgart 1980. These include

- polybutadiene (BR),

- polyisoprene (IR),
- styrene/butadiene copolymers, for example emulsion SBR (E-SBR) or solution SBR (S-SBR), preferably having a styrene content of 1% to 60% by weight, more preferably 2% to 50% by weight, based on the overall polymer,
- chloroprene (CR),
- isobutylene/isoprene copolymers (IIR),
- butadiene/acrylonitrile copolymers, preferably having an acrylonitrile content of 5% to 60% by weight, preferably 10% to 50% by weight, based on the overall polymer (NBR),
- partly hydrogenated or fully hydrogenated NBR rubber (HNBR),
- ethylene/propylene/diene copolymers (EPDM) or
- abovementioned rubbers additionally having functional groups, for example carboxyl, silanol or epoxy groups, for example epoxidized NR, carboxyl-functionalized NBR or silanol- functionalized (-SiOH) or siloxy-functionalized (-Si-OR), amino-, epoxy-, mercapto-, hydroxyl- functionalized SBR,

and mixtures of these rubbers. Of particular interest for the production of automobile tyre treads are anionically polymerized S-SBR rubbers (solution SBR) having a glass transition temperature above -50°C and mixtures thereof with diene rubbers.

The rubber used may more preferably be NR or functionalized or unfunctionalized S-SBR and BR.

The rubber mixtures according to the invention may comprise further rubber auxiliaries, such as reaction accelerators, ageing stabilizers, heat stabilizers, light stabilizers, antiozonants, processing aids, plasticizers, resins, tackifiers, blowing agents, dyes, pigments, waxes, extenders, organic acids, retarders, metal oxides, and activators such as diphenylguanidine, triethanolamine, polyethylene glycol, alkoxy-terminated polyethylene glycol alkyl-O-$(CH_2$-$CH_2$-$O)_{yI}$-H with $y^I$ = 2-25, preferably $y^I$ = 2-15, more preferably $y^I$ = 3-10, most preferably $y^I$ = 3-6, or hexanetriol, that are familiar to the rubber industry.

The rubber auxiliaries may be used in familiar amounts determined inter alia by factors including the intended use. Customary amounts may, for example, be amounts of 0.1 to 50 parts by weight, based on 100 parts rubber. Crosslinkers used may be peroxides, sulfur or sulfur donor substances. The rubber mixtures according to the invention may further comprise vulcanization accelerators. Examples of suitable vulcanization accelerators may be mercaptobenzothiazoles, sulfenamides, thiurams, dithiocarbamates, thioureas and thiocarbonates. The vulcanization accelerators and sulfur may be used in amounts of 0.1 to 10 parts by weight, based on 100 parts rubber, preferably 0.1 to 5 parts by weight, based on 100 parts rubber.

The rubber mixtures according to the invention can be vulcanized at temperatures of 100°C to 200°C, preferably 120°C to 180°C, optionally at a pressure of 10 to 200 bar. The blending of the rubbers with the precipitated silica according to the invention, any rubber auxiliaries and the silane may be conducted in known mixing units, such as rollers, internal mixers and mixing extruders.

The rubber mixtures according to the invention can be used for production of moulded articles, for example for the production of tyres, especially pneumatic tyres or tyre treads, cable sheaths, hoses, drive belts, conveyor belts, roller coverings, footwear soles, sealing rings and damping elements.

Advantages of the precipitated silicas according to the invention are dispersibility and the particular reinforcement characteristics in rubber mixtures.

## Analytical methods for characterization of the silicas

### Drying loss, 2 h 105°C - determination of drying loss in accordance with DIN EN ISO 787-2

The weight loss of a sample heated at 105°C in a drying cabinet for 2 h is determined.

The procedure is in accordance with DIN EN ISO 787-2 with the specifications described below:
The weighing bottle (with flanged lid; diameter about 80 mm, height about 30 ml) is heated at 105°C with the lid off for about 1 h. After cooling in a desiccator, the lid is inserted. The weight is determined accurately to 0.01 g on a precision balance. 5-10 g of the sample (weight depending on the bulk density) is weighed out accurately and spread out on the base of the weighing bottle in a uniform layer. The weighing bottle is cautiously opened and heated at (105 ± 2)°C in a drying cabinet for 2 h (lid is heated as well, but the weighing bottle is not yet closed therewith).

The weighing bottle is cautiously closed with the lid and left to cool in a desiccator and reweighed accurately to 0.01 g.

Calculation

$$Volatile\ fractions\ /\% = \frac{(E-A)\cdot 100\%}{E}$$

E = starting weight /g
A = final weight /g

**pH - pH of silicas in accordance with DIN EN ISO 787-9**

The procedure is in accordance with DIN EN ISO 787-9 with the specifications described below: Pelletized sample material is pulverized by mortar and pestle before being weighed out.
A 5% (m/m) aqueous suspension of the sample to be analysed is prepared. For this purpose, demineralized (DMPA) water is used.
Before the measurement of pH, the sample suspension is agitated on an agitator for at least 5 minutes.
The pH is measured on a previously calibrated pH meter from Metrohm, model 780 with pH electrode 6.0228.000 (from Metrohm) at 23°C.

**CTAB surface area - determination in accordance with ISO 5794-1-G**

The method is based on the adsorption of buffered CTAB (N-cetyl-N,N,N-trimethylammonium bromide) in aqueous solution on the "outer" surface of silicas, which is also referred to as "rubber-active surface". Unadsorbed CTAB is back-titrated by means of NDSS (dioctylsodium sulfosuccinate solution). The endpoint of the titration is at the maximum rise in opacity of the solution.
The procedure is in accordance with ISO 5794-1 G, with specifications, additions and departures as described below:
In the course of sample preparation, specimens of silicas and silicates in the form of coarse particles are preferably ultrafinely ground by means of a suitable mill or crushed with a mortar and pestle and sieved through a 90 μm sieve, not crushed with a mortar and pestle and fractionated by means of a 150 μm sieve as described in the standard.
The suspensions composed of test specimen and CTAB solution having an expected CTAB surface area of less than 200 $m^2/g$ are stirred for 10 minutes. The suspensions composed of test specimen and CTAB solution having an expected CTAB surface area of not less than 200 $m^2/g$ are stirred for 35 minutes, as described in the standard.
After the adsorption, the silica is filtered through a 0.2 μm polyamide filter.
The filtrate is titrated using a Metrohm titroprocessor with an autosampler and Tirando 809. The phototrode used is the Spectrosense 523 nm from Metrohm.

**BET surface area ($N_2$, multipoint) - determination in accordance with DIN ISO 9277**

The method serves to determine the specific $N_2$ surface area of silica by the BET method in accordance with DIN ISO 9277. In this method, the measurement is determined by low-temperature adsorption of nitrogen at defined partial pressures. The analysis is conducted as a multipoint determination and shows virtually linear behaviour in the partial pressure range (p/po) of 0.05-0.20 in the case of determination of 5 measurement points in total.
The procedure is in accordance with DIN ISO 9277 with the specifications described below: Pelletized samples, before being weighed out, are cautiously crushed with a spatula and then degassed under reduced pressure using the MICROMERITICS VacPrep™ 061 evacuated degassing thermostat at (160 +/- 2)°C for 60 minutes.
For determination of the BET surface area, the following 5 relative pressure points (p/po) are recorded during the adsorption phase: 0.0500; 0.0875; 0.1250; 0.1625 and 0.2000.
For the measurements, the TriStar 3000 series (3000 / 3020 / 3030) from MICROMERITICS with a static volumetric test method and a Dewar vessel is used.

**Ro-Tap (> 300 μm) - sieve analysis in accordance with ISO 5794-1 Annex F**

Sieve analysis is effected with a rotary sieving machine (Tyler Ro-Tap RX-29 analytical sieving machine with timer switch). The method is conducted in accordance with ISO 5794-1 Annex F. For the sieve analysis, the test sieves with various mesh sizes are stacked one on top of another (analytical sieve with metal sieve mesh, ISO 3310-1, nominal mesh size 75 μm, sieve diameter 200 mm, analytical sieve with metal sieve mesh, ISO 3310-1, nominal mesh size 150 μm, sieve diameter 200 mm, analytical sieve with metal sieve mesh, ISO 3310-1, nominal mesh size 300 μm, sieve diameter 200 mm). The sieving tower is inserted into the analytical sieving machine in the sequence specified. The sieve residues are determined in the following manner: The sample is gently homogenized prior to the determination. 100 g is weighed accurately to 0.01 g into a beaker on a precision balance, and the sample is transferred quantitatively onto the uppermost sieve (300 μm). Ro-Tap sieving is effected for 5 min with the tapper. After sieving has ended, the sieving tower is removed and the fractions on the 75 μm and 300 μm sieves are weighed.

Calculation of sieve residues

$$\text{Ro-Tap} < 75\ \mu\text{m in } \% = AS \cdot 100\% / E$$

and

$$\text{Ro-Tap} > 300\ \mu\text{m in } \% = A300 \cdot 100\% / E$$

and

$$\text{Ro-Tap} > 150\ \mu\text{m in } \% = A150 \cdot 100\% / E$$

where

A300 = residue on the 300 μm sieve in g
AS = residue in the sieve pan in g
E = starting weight in g

**Tailing factor 5% - Determination of particle size distribution and asymmetry thereof by disc centrifuge**

What is being determined is the particle size distribution of silica. The sample to be analysed is dispersed in aqueous solution and separated in a disc centrifuge according to its particle size: the larger and hence the heavier the particles are, the more quickly they move in the field of gravity of the centrifuge. They pass through a light barrier therein; what is measured is absorption as a function of time. These data are used to calculate the particle size distribution, i.e. frequency as a function of particle diameter.

Note: Owing to the English notation, " , " are given as " . " in the description of this test method.

Instruments

CPS DC24000 disc centrifuge

Hielscher UP200S ultrasound finger with S14 sonotrode

Cooling bath, for example Julabo F12

Fritsch mill; "Pulverisette 14" model with 80 μm sieve

Analytical balance

Luer disposable syringes: 1.0 ml and 2.0 ml

30 ml snap-lid vials, d = 28 mm, h = 75 mm

Magnetic stirrer with stirrer bar

Chemicals

Ethanol, p.A., for example from Merck

Water, deionized

Sucrose, powder, >= 99.7%, for example from Acros

Dodecane 99%, for example from Merck

PVC reference standard, for example from CPS Instruments

Method

Preparation of the disc centrifuge

The disc centrifuge is adjusted to the desired speed. For precipitated silica, a speed of 20 000 rpm is established.

The running disc centrifuge is filled with a density gradient of sucrose solutions and blanketed with a dodecane layer.

Sugar solutions of different concentration are produced. The concentrations of the sugar solutions here are between w = 8% and w = 24%. The density gradient is formed in nine stages:

24% / 22% / 20% / 18% / 16% / 14% / 12% / 10% / 8%

1.6 ml of sugar solution for each density stage is injected into the disc centrifuge, commencing with the highest concentration. Alternatively, just two sugar solutions having the highest and lowest concentrations may be produced and mixed with one another in the required mixing ratios in the metering syringe. Prior to the injection, the syringe must be shaken briefly in order to mix the sugar solutions. Finally, 0.5 ml of dodecane is injected.

Sample preparation

All the precipitated silica samples (including powder samples) are ground with the Fritsch mill before the determination. Fumed silica samples are not ground.

15 g (± 0.5 g) of sample material is ground here in the Fritsch mill.

0.75 g (± 0.05 g) of the ground material is weighed out into a 30 ml snap-lid vial, and 15 ml of deionized water is added.

The filled snap-lid vial is fixed in a cooling bath with the aid of a clamp. The cooling bath has been pre-equilibrated to a temperature of 5°C (± 1°C). The ultrasound finger is positioned such that the sonotrode is immersed 5.5 cm (but at least 5 cm) deep into the vial - measured from the upper edge of the snap-lid vial.

The sample is sonicated at 100% power and 100% pulse for 15 min.

Procedure

Before commencement of the measurements, the centrifuge is allowed to warm up at the preset speed for at least 30 min after formation of the density gradient.

The measurement procedure to be used is called up in the instrument software. For the silica measurements, the following parameters should be established:

Sample Parameters:

| | |
|---|---|
| Maximum Diameter: | 5.1 microns |
| Minimum Diameter: | 0.02 microns |
| Particle Density: | 2.0 g/ml |
| Particle Refractive Index: | 1.44 |
| Particle Absorption: | 0.001 K |
| Non-Sphericity Factor: | 1.1 |

Calibration Standard Parameters:

| | |
|---|---|
| Peak Diameter: | xxx microns [1)] |
| Half Height Peak Width: | 0.2 microns [1)] |
| Particle Density: | 1.385 g/ml[1)] |

Fluid Parameters:

| | |
|---|---|
| Fluid Density: | 1,045 g/ml |
| Fluid Refractive Index: | 1,344 |
| Fluid Viscosity: | 1.2 cps (counts per s) |

Presentation Parameters:

| | |
|---|---|
| Display Mode: | Weight |
| X-axis Scale: | Log |

[1)] depending on the calibration standard used, input in accordance with manufacturer data.

In the "System Configuration" sub-menu, the measurement wavelength is set to 470 nm.

The sample dispersion is analysed by switching to the "Operate Analyser" sub-menu. The steps required for the measurement are read off successively in the "Instructions" line.

Before each measurement, a calibration standard should be recorded. The corresponding preliminary setting is undertaken under "Options" in the "Operate Analyser" sub-menu.

0.1 ml of the standard or of the sample suspension is injected in each case. The measurement is stopped via the "Terminate" button when the measurement signal has gone below the baseline.

A double determination (including dispersion) is conducted for each sample to be analysed.

Result

The raw data curve (absorption measurement) is used to ascertain a weight distribution by application of Mie theory. The following are reported:

Peak in nm - most common particle size, corresponding to the abscissa value of the maximum of the distribution function;

Half-height width ($d_{50}$) in nm - corresponds to the width of the distribution function at 50% of its maximum value;

Mean (weight-average) in nm - that abscissa value in the distribution function that divides the area beneath the curve into 2 halves of equal size;

Median (50th weight percentile) in nm - particle size at 50% of the cumulative curve;

$d_{25}$ (25th oversize weight percentile) (in nm) - particle size at which 25% of the distribution is above (from cumulative curve)

$d_{75}$ (75th oversize weight percentile) (in nm) - particle size at which 75% of the distribution is above (from cumulative curve)

$d_{95}$ (95th oversize weight percentile) (in nm) - particle size at which 95% of the distribution is above (from cumulative curve)

**Tailing factor 5%: Ascertainment of the asymmetry of the particle size distribution from the measurement by disc centrifuge.**

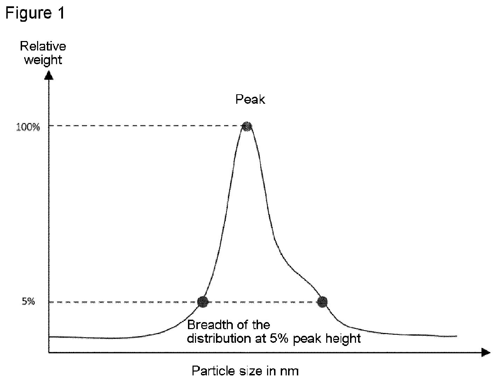

The asymmetry is ascertained from the weight-based size distribution (Figure 1). For this purpose, the relationship between the peak, the breadth of the distribution at 5% peak height and the value of $d_{95}$ is expressed as follows (Figure 1):

$$Tailing\ factor\ 5\% = \frac{Breadth\ of\ the\ distribution\ at\ 5\%\ peak\ height\ in\ nm}{2\ \cdot\ peak\ in\ nm} \cdot d_{95}\ in\ nm$$

**Sears number $V_2$ - Determination of the Sears number on hydrophilic silicas**

By titration of silica with standard 0.1 mol/l potassium hydroxide solution in the range from pH 4 to pH 9, it is possible to determine the Sears number as a measure of the number of free silanol groups. The method of determination is based on the following chemical reactions, where ≡SiOH is supposed to represent a silanol group of the silica:

$$\equiv SiOH + NaCl \Rightarrow \equiv SiONa + HCl$$

$$HCl + KOH \Rightarrow KCl + H_2O.$$

Procedure:

About 10.0 g of a pulverulent, spherical or granular silica is uniformly comminuted with a Fritsch mill (Pulverisette 14 with 80 μm screen) at 10 000 rpm for 60 seconds. About 1.50 g of the silica thus treated is weighed accurately to 0.1 mg into a 250 ml beaker and admixed with 150 ml of NaCl solution (β (NaCl) = 200 g/l, adjusted to pH 3 with hydrochloric acid c(HCl)=1 mol/l). After complete wetting of the sample, the suspension is dispersed by means of an Ultra Turrax PT1300D (from Polytron) at a speed of 20 000 rpm for 30 seconds.

Before the titrations, the pH meter (LL Unitrode pH electrode from Metrohm, model: PT1000) is calibrated at room temperature using buffer solutions (pH 4.00, pH 7.00 and pH 9.00). The pH meter is first used to measure the starting pH of the suspension, then, according to the result, the pH is adjusted to 4.00 with potassium hydroxide solution (0.1 mol/l) or hydrochloric acid solution (0.1 mol/l). Subsequently, 0.1 mol/l standard KOH solution is used to conduct the titration up to pH 9.00. The consumption of KOH solution in ml from pH 4.00 to pH 9.00 corresponds to $V_{pH4-9}$. In the same way, a blank titration (without addition of silica) is conducted. The blank value of the solution describes the volume of potassium hydroxide solution $V_{BL}$ which is required to titrate the NaCl solution without silica from pH 4 to pH 9.

The Sears number based on the original substance with the unit ml/(1.5 g) is calculated from:

$$\text{Sears number}_{original} = (V_{pH4-9} - V_{BL}) * T * (1.5\ g) / E$$

The Sears number based on the dried substance with the unit ml/(1.5 g) is calculated from:

$$\text{Sears number}_{dried\ subst.} = (V_{pH4-9} - V_{BL}) * T * (1.5\ g) / E * (100 / (100 - TV))$$

With T = titre of the standard KOH solution used

E = initial mass of the sample, in g
TV = drying loss of the silica sample in %

The Sears number$_{original}$ corresponds to the Sears number $V_2$.

## Examples

The pH during the precipitations is measured at 60°C unless a different temperature is stipulated in the experiment description.

### Example 1:

A reactor with a propeller stirrer system is initially charged with 1474 l of water and heated up to 90°C. The initial charge is adjusted to pH 2.3 with sulfuric acid. Within 22 minutes, 220 kg of waterglass (density 1.345 kg/l, 27% $SiO_2$, 8 % $Na_2O$) and sulfuric acid (density 1.84 kg/l, 96% $H_2SO_4$) are added simultaneously, such that the pH in the reaction medium is 2.3. Subsequently, the metered addition of sulfuric acid is stopped, and the metered addition of waterglass is continued (2.55 kg/min) until the pH is 8.1. The reaction medium is aged at 90°C for 15 minutes. Subsequently, 379 kg of waterglass is added within 38 minutes. In the course of this, the metered addition of sulfuric acid is controlled in such a way that the pH in the reaction medium is 9 (measured at 23°C). Subsequently, the addition of waterglass is stopped and the feeding of sulfuric acid is continued until a pH of 2.3 (measured at 23°C) is attained. The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 6.3% |
| CTAB surface area | 215 $m^2/g$ |
| pH, 5% in water; 23°C | 5.2 |
| BET surface area ($N_2$, multipoint) | 235 $m^2/g$ |
| BET - CTAB | 20 $m^2/g$ |
| BET / CTAB | 1.1 |
| Tailing factor 5% | 236 nm |

### Example 2:

A reactor with a propeller stirrer system is initially charged with 1676 l of water and 121 kg of waterglass (density 1.345 kg/l, 27% $SiO_2$, 8% $Na_2O$), and heated up to 90°C. 16 kg of sulfuric acid (density 1.84 kg/l, 96% $H_2SO_4$) is added within 16.7 minutes until the pH is 2.5. This is followed by ageing for 5 minutes and adjustment of the pH to 6 with waterglass (1 kg/minute). Ageing is effected at 90°C for 30 minutes. This is followed by metered addition of 120.9 kg of waterglass at a rate of 13.33 kg/minute. This is followed by ageing for another 5 minutes. Then 16 kg of sulfuric acid is metered in at 0.95 kg/min until the pH is 2.5. The pH is adjusted again to pH 6 with waterglass (1 kg/min). Ageing is effected again at that temperature for 15 minutes. The ageing is followed by another metered addition of 120.9 kg of waterglass at a rate of 13.33 kg/minute. This is followed by ageing for another 5 minutes. Then 7 kg of sulfuric acid is added at a rate of 0.95 kg/min until the pH is 8.5. This is followed by ageing for 30 minutes and addition of further sulfuric acid at 0.4 kg/minute such that the pH is 3.3 (measured at 23°C). The resulting suspension is filtered and washed with water as usual and subjected to spin-flash drying. The powder thus obtained is subsequently pelletized. The pelletized silica has the following analytical parameters:

| | |
|---|---|
| Drying loss, 2 h 105°C | 3.8% |
| CTAB surface area | 158 $m^2/g$ |
| pH, 5% in water; 23°C | 6.4 |
| $N_2$ surface area ($N_2$, multipoint) | 173 $m^2/g$ |
| BET - CTAB | 15 $m^2/g$ |
| BET / CTAB | 1.1 |
| Tailing factor 5% | 180 nm |

**Example 3:**

A reactor with a propeller stirrer system is initially charged with 1700 l of water and 122.3 kg of waterglass (density 1.345 kg/l, 27% $SiO_2$, 8% $Na_2O$), and heated up to 53°C. 16 kg of sulfuric acid (density 1.84 kg/l, 96% $H_2SO_4$) is metered in at a metering rate of 1.9 kg/min until the pH is 2.5. The addition is followed by ageing for 5 minutes. Then waterglass is metered in at a metering rate of 1 kg/min until the pH is 6. Then the mixture is aged for 30 minutes. After the ageing, another 120.9 kg of waterglass is added within 3.3 minutes. Then the mixture is aged for 5 minutes before another 16 kg of sulfuric acid is added at a rate of 1.9 kg/min until the pH is 2.5. After ageing for 5 minutes, waterglass is used to adjust the pH to 6 (1 kg/min). This is followed by ageing for 15 minutes and addition of another 120.9 kg of waterglass to the suspension. This is followed by ageing for 5 minutes, and then 7 kg of sulfuric acid is added at 1.9 kg/min until the pH is 8.5. Then the mixture is heated to 90°C within 21 minutes and aged at that temperature for 30 minutes. Then sulfuric acid is metered in at 0.4 kg/min until the reaction mixture has reached a pH of 4.0 (measured at 23°C).

The resulting suspension is filtered and washed with water as usual and subjected to spin-flash drying. The powder thus obtained is subsequently pelletized. The pelletized silica has the following analytical parameters:

| | |
|---|---|
| Drying loss, 2 h 105°C | 4.7% |
| CTAB surface area | 297 $m^2/g$ |
| pH, 5% in water; 23°C | 5.6 |
| $N_2$ surface area ($N_2$, multipoint) | 322 $m^2/g$ |
| BET - CTAB | 25 $m^2/g$ |
| BET / CTAB | 1.1 |
| Tailing factor 5% | 256 nm |

**Example 4:**

A reactor with a propeller stirrer system is initially charged with 1480 l of water and heated up to 84°C. The initial charge is adjusted to pH 2.3 with sulfuric acid. Within 22 minutes, 220 kg of waterglass (density 1,345 kg/l, 27% $SiO_2$, 8 % $Na_2O$) and sulfuric acid (density 1.84 kg/l, 96% $H_2SO_4$) are added simultaneously, such that the pH in the reaction medium is 2.3. Subsequently, the metered addition of sulfuric acid is stopped, and the metered addition of waterglass is continued (2.56 kg/min) until the pH is 4.4. The metered addition of waterglass is stopped, and the pH of the suspension rises to 6.0. The reaction medium is aged at 84°C for 15 minutes. Then 18.7 kg of waterglass is metered in at 9.8 kg/min, such that the pH is 9 (measured at 23°C). Subsequently, 350 kg of waterglass is added within 35 minutes. In the course of this, the metered addition of sulfuric acid is controlled in such a way that the pH in the reaction medium is 9 (measured at 23°C). Subsequently, the addition of waterglass is stopped and the feeding of sulfuric acid is continued until a pH of 2.6 (measured at 23°C) is attained. The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 3.81 |
| CTAB surface area | 248 $m^2/g$ |
| pH, 5% in water; 23°C | 6.4 |
| $N_2$ surface area ($N_2$, multipoint) | 272 $m^2/g$ |
| BET - CTAB | 24 $m^2/g$ |
| BET / CTAB | 1.1 |
| Tailing factor 5% | 260 nm |

**Example 5:**

A reactor with a propeller stirrer system is initially charged with 1477 l of water and heated up to 78°C. The initial charge is adjusted to pH 2.3 with sulfuric acid. Within 22 minutes, 220 kg of waterglass (density 1,345 kg/l, 27% $SiO_2$, 8 % $Na_2O$) and sulfuric acid (density 1.84 kg/l, 96% $H_2SO_4$) are added simultaneously, such that the pH in the reaction medium is 2.3. Subsequently, the metered addition of sulfuric acid is stopped, and the metered addition of waterglass is continued (2.56 kg/min) until the pH is 4.3. The metered addition of waterglass is stopped, and the pH of the suspension rises to 6.0. The reaction medium is aged at 78°C for 15 minutes. Then 27.3 kg of waterglass is metered in at 10.1 kg/min, such that the pH is 9 (measured at 23°C). Subsequently, 350 kg of waterglass is added within 35 minutes. In the course of this, the metered addition of sulfuric acid is controlled in such a way that the pH in the reaction medium is 9 (measured at 23°C). Subsequently, the addition of waterglass is stopped and the feeding of sulfuric acid is continued until a pH of 2.7 (measured at 23°C) is attained. The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 4.4% |
| CTAB surface area | 266 $m^2/g$ |
| pH, 5% in water; 23°C | 6.3 |
| $N_2$ surface area ($N_2$, multipoint) | 303 $m^2/g$ |
| BET - CTAB | 37 $m^2/g$ |
| BET / CTAB | 1.1 |
| Tailing factor 5% | 239 nm |

**Example 6:**

A reactor with a propeller stirrer system is initially charged with 1439 l of water and heated up to 84°C. The initial charge is adjusted to pH 2.9 with sulfuric acid. Within 22 minutes, 220 kg of waterglass (density 1,345 kg/l, 27% $SiO_2$, 8 % $Na_2O$) and sulfuric acid (density 1.84 kg/l, 96% $H_2SO_4$) are added simultaneously, such that the pH in the reaction medium is 2.9. Subsequently, the metered addition of sulfuric acid is stopped, and the metered addition of waterglass is continued (2.43 kg/min) until the pH is 4.5. The metered addition of waterglass is stopped, and the pH of the suspension rises to 6.0. The reaction medium is aged at 84°C and pH 6 for 15 minutes. Then 49.9 kg of waterglass is metered in within 5 min, such that the pH is 9.5 (measured at 23°C).

Subsequently, 350 kg of waterglass is added within 35 minutes. In the course of this, the metered addition of sulfuric acid is controlled in such a way that the pH in the reaction medium is 8.6. Subsequently, the addition of waterglass is stopped and the feeding of sulfuric acid is continued until a pH of 2.5 (measured at room temperature) is attained. The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 4.5% |
| CTAB surface area | 243 $m^2/g$ |
| pH, 5% in water; 23°C | 6.4 |
| $N_2$ surface area ($N_2$, multipoint) | 272 $m^2/g$ |
| BET - CTAB | 28 $m^2/g$ |
| BET / CTAB | 1.1 |
| Tailing factor 5% | 277 nm |

**Example 7:**

A reactor with a propeller stirrer system is initially charged with 1446 l of water and heated up to 78°C. The initial charge is adjusted to pH 2.9 with sulfuric acid. Within 22 minutes, 220 kg of waterglass (density 1.345 kg/l, 27% $SiO_2$, 8 % $Na_2O$) and sulfuric acid (density 1.84 kg/l, 96% $H_2SO_4$) are added simultaneously, such that the pH in the reaction medium is 2.9. Subsequently, the metered addition of sulfuric acid is stopped, and the metered addition of waterglass is continued (2.35 kg/min) until the pH is 4.7. The metered addition of waterglass is stopped, and the pH of the suspension rises to 6.0. The reaction medium is aged at 78°C and pH 6 for 15 minutes. Then 50.1 kg of waterglass is metered in within 5 min, such that the pH is 9.5 (measured at 23°C). Subsequently, 350 kg of waterglass is added within 35 minutes. In the course of this, the metered addition of sulfuric acid is controlled in such a way that the pH in the reaction medium is 8.6. Subsequently, the addition of waterglass is stopped and the feeding of sulfuric acid is continued until a pH of 2.6 (measured at 23°C) is attained. The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 4.4% |

(continued)

| | |
|---|---|
| CTAB surface area | 263 $m^2/g$ |
| pH, 5% in water; 23°C | 6.2 |
| $N_2$ surface area ($N_2$, multipoint) | 297 $m^2/g$ |
| BET - CTAB | 34 $m^2/g$ |
| BET / CTAB | 1.1 |
| Tailing factor 5% | 360 nm |

**Example 8:**

A reactor with a propeller stirrer system is initially charged with 1280 l of water and heated up to 90°C. The initial charge is adjusted to pH 2.9 with sulfuric acid. Within 22 minutes, 220 kg of waterglass (density 1.345 kg/l, 27% $SiO_2$, 8 % $Na_2O$) and sulfuric acid (density 1.84 kg/l, 96% $H_2SO_4$) are added simultaneously, such that the pH in the reaction medium is 2.9. Subsequently, the metered addition of sulfuric acid is stopped, and the metered addition of waterglass is continued (2.45 kg/min) until the pH is 8.1. The metered addition of waterglass is stopped and the reaction medium is aged at 90°C for 15 minutes. Then 190 kg of waterglass is metered in at 10.1 kg/min within 19 min. Subsequently, 350 kg of waterglass is added within 35 minutes. Subsequently, sulfuric acid is metered in at 1.28 kg/min such that the pH falls to 2.7 (measured at 23°C). The resulting suspension is filtered and washed with water as usual and subjected to a brief drying operation such as spray-drying or spin-flash drying. If appropriate, the powder thus obtained is pelletized.

The pelletized silica has the following analytical parameters:

| | |
|---|---|
| Drying loss, 2 h 105°C | 4.5% |
| CTAB surface area | 190 $m^2/g$ |
| pH, 5% in water; 23°C | 6.4 |
| $N_2$ surface area ($N_2$, multipoint) | 225 $m^2/g$ |
| BET - CTAB | 35 $m^2/g$ |
| BET / CTAB | 1.2 |
| Tailing factor 5% | 269 nm |

**Comparative Example 1:**

For comparative example 1, ZEOSIL® HRS 1200 MP from SOLVAY S.A. is used.

**Comparative Example 2:**

For comparative example 2, ZEOSIL® PREMIUM 200 MP from SOLVAY S.A. is used.

**Comparative Example 3:**

Comparative Example 3 is a reworking of example 2 from EP 2794479.

**Comparative Example 4:**

For comparative example 4, ZEOSIL® 1165 MP from SOLVAY S.A. is used.

**Example 9: Examination of rubber characteristics**

The terms "unvulcanized rubber mixture" and "vulcanized rubber mixture" are used synonymously in this document. Table 1 specifies the rubber chemicals used.

**Table 1: Overview of rubber chemicals used**

| Name | Active ingredient | Production/supplier |
|---|---|---|
| S-SBR | TDAE-extended solution styrene-butadiene rubber | ARLANXEO Deutschland GmbH |

(continued)

| Name | Active ingredient | Production/supplier |
|---|---|---|
| Buna CB 24 | Nd-BR; see note [2] | ARLANXEO Deutschland GmbH |
| Si 266 | Bifunctional silane | Evonik Resource Efficiency GmbH |
| N330 | Industrial carbon black | Orion Engineered Carbons GmbH |
| ZnO RS RAL 844 C | Zinc oxide | Carl Arnsperger Chemikalien GmbH & Co, |
| Vivatec 500 | TDAE | H&R GmbH Co. KGaA |
| Edenor ST1 GS | Stearic acid | Caldic Deutschland GmbH |
| Vulkanox HS/LG | TMQ | LANXESS Deutschland GmbH |
| Vulkanox 4020/LG | 6PPD | LANXESS Deutschland GmbH |
| Protektor G 3108 | Wax | Paramelt B.V., the Netherlands |
| Rhenogran DPG-80 | DPG; 80% active ingredient | Rhein Chemie additives GmbH |
| Richon TBZTD-OP | TBzTD | WEBER & SCHAER GmbH & Co, KG (produced by Dalian Richon) |
| Vulkacit CZ/EG-C | CBS | LANXESS Deutschland GmbH |
| Sulfur | Ground sulfur | HENSELER GmbH |

[1] Buna® VSL 4526-2 HM is a solution styrene-butadiene rubber extended with 37.5 phr TDAE oil; Mooney (1+4 @ 100°C): 62 ME; vinyl: 44.5%; styrene: 26%
[2] Buna CB 24 is a Neodymium Butadiene Rubber, not oil extended; cis 1,4 content: min. 96 %

The silicas used for the rubber mixtures and the analytical values thereof are compared in Table 2.

Table 2: Analytical values

| | | Comparative Example 1 | Comparative Example 2 | Comparative Example 3 | Example 1 | Example 3 | Example 4 | Example 5 | Example 6 | Example 7 | Example 8 |
|---|---|---|---|---|---|---|---|---|---|---|---|
| Drying loss, 2 h 105°C | % | 5.1 | 5.2 | 5.7 | 6.3 | 4.7 | 3.8 | 4.4 | 4.5 | 4.4 | 4.5 |
| CTAB surface area | $m^2/g$ | 193 | 202 | 238 | 215 | 297 | 248 | 266 | 243 | 263 | 190 |
| pH, 5% in water; 23°C | | 6.2 | 6.2 | 6.9 | 5.2 | 5.6 | 6.4 | 6.3 | 6.4 | 6.2 | 6.4 |
| $N_2$ surface area ($N_2$, multipoint) | $m^2/g$ | 192 | 205 | 254 | 235 | 322 | 272 | 303 | 272 | 297 | 225 |
| BET - CTAB | $m^2/g$ | -2 | 3 | 16 | 20 | 25 | 24 | 37 | 28 | 34 | 35 |
| BET / CTAB | | 1.0 | 1.0 | 1.1 | 1.1 | 1.1 | 1.1 | 1.1 | 1.1 | 1.1 | 1.2 |
| Tailing factor 5% | nm | 88 | 91 | 143 | 236 | 256 | 260 | 239 | 277 | 360 | 269 |

The formulations used for the rubber mixtures are specified in Table 3. The unit "phr" ("parts per hundred rubber") here means parts by weight based on 100 parts of the raw rubber used.

Table 3: Formulations of the rubber mixtures

| Name | Comparative mixture 1 | Comparative mixture 2 | Comparative mixture 3 | Inventive mixture 1 | Inventive mixture 2 | Inventive mixture 3 | Inventive mixture 4 | Inventive mixture 5 | Inventive mixture 6 | Inventive mixture 7 |
|---|---|---|---|---|---|---|---|---|---|---|
| Figures in | phr | phr | phr | phr | phr | phr | phr | phr | phr | phr |
| Stage 1 | | | | | | | | | | |
| Buna VSL 4526-2 | 96.25 | 96.25 | 96.25 | 96.25 | 96.25 | 96.25 | 96.25 | 96.25 | 96.25 | 96.25 |
| Buna CB 24 | 30.00 | 30.00 | 30.00 | 30.00 | 30.00 | 30.00 | 30.00 | 30.00 | 30.00 | 30.00 |
| Comparative Example 1 | 80.00 | | | | | | | | | |
| Comparative Example 2 | | 80.00 | | | | | | | | |
| Comparative Example 3 | | | 80.00 | | | | | | | |
| Inventive Example 1 | | | | 80.00 | | | | | | |
| Inventive Example 3 | | | | | 80.00 | | | | | |
| Inventive Example 4 | | | | | | 80.00 | | | | |
| Inventive Example 5 | | | | | | | 80.00 | | | |
| Inventive Example 6 | | | | | | | | 80.00 | | |
| Inventive Example 7 | | | | | | | | | 80.00 | |
| Inventive Example 8 | | | | | | | | | | 80.00 |
| Si 266 | 7.00 | 7.32 | 8.63 | 7.79 | 10.77 | 8.99 | 9.64 | 8.81 | 9.53 | 6.89 |
| N330 | 5.00 | 5.00 | 5.00 | 5.00 | 5.00 | 5.00 | 5.00 | 5.00 | 5.00 | 5.00 |
| ZnO RS RAL 844 C | 2.00 | 2.00 | 2.00 | 2.00 | 2.00 | 2.00 | 2.00 | 2.00 | 2.00 | 2.00 |
| Edenor ST1 GS | 2.00 | 2.00 | 2.00 | 2.00 | 2.00 | 2.00 | 2.00 | 2.00 | 2.00 | 2.00 |
| Vivatec 500 | 8.75 | 8.75 | 8.75 | 8.75 | 8.75 | 8.75 | 8.75 | 8.75 | 8.75 | 8.75 |
| Vulkanox HS/LG | 1.50 | 1.50 | 1.50 | 1.50 | 1.50 | 1.50 | 1.50 | 1.50 | 1.50 | 1.50 |
| Vulkanox 4020/LG | 2.00 | 2.00 | 2.00 | 2.00 | 2.00 | 2.00 | 2.00 | 2.00 | 2.00 | 2.00 |
| Protektor G 3108 | 2.00 | 2.00 | 2.00 | 2.00 | 2.00 | 2.00 | 2.00 | 2.00 | 2.00 | 2.00 |
| | | | | | | | | | | |
| Stage 2 | | | | | | | | | | |
| Mixture from stage 1 | | | | | | | | | | |
| Rhenogran DPG-80 | 2.50 | 2.50 | 2.50 | 2.50 | 2.50 | 2.50 | 2.50 | 2.50 | 2.50 | 2.50 |

(continued)

| Stage 2 | | | | | | | | | | |
|---|---|---|---|---|---|---|---|---|---|---|
| | | | | | | | | | | |
| Stage 3 | | | | | | | | | | |
| Mixture from stage 2 | | | | | | | | | | |
| Richon TBZTD-OP | 0.20 | 0.20 | 0.20 | 0.20 | 0.20 | 0.20 | 0.20 | 0.20 | 0.20 | 0.20 |
| Vulkacit CZ/EG-C | 1.60 | 1.60 | 1.60 | 1.60 | 1.60 | 1.60 | 1.60 | 1.60 | 1.60 | 1.60 |
| Sulfur | 2.00 | 2.00 | 2.00 | 2.00 | 2.00 | 2.00 | 2.00 | 2.00 | 2.00 | 2.00 |

The necessary amounts of silane used to exploit the reinforcement potential of the respective silica were ascertained by the rule of three. The higher the specific surface area (it is the CTAB surface area that is crucial to the rubber-related reinforcing action), the higher the amount of silane needed. The basis used is the assumption that a CTAB surface area of 160 $m^2$/g requires 5.8 phr Si 266.

The general process for producing rubber mixtures and vulcanizates thereof is described in "Rubber Technology Handbook", W. Hofmann, Hanser Verlag 1994. Specifically, the equipment used and the mixing method used for production of the rubber mixture according to the invention, and also the reference mixtures, are shown in Table 4.

For preparation for the mixing operation, the plasticizer to be introduced is weighed out in a low-melting LDPE pouch that can be included in the processing. The term "plasticizer" is used synonymously in this context with the TDAE (Treated Distilled Aromatic Extract).

Table 4: Mixing method

| Stage 1 | GK 1.5 E, kneader fill factor 0.65; 70 rpm; kneader temperature: 70°C |
|---|---|
| min:se c | Desired mixing temperature: 145°C-155°C |
| 00:00-00:15 | Add polymers; close ram and mix for 15 s |
| 00:15-01:15 | Add 1/2 of silica, silane; close ram and mix for 60 s |
| 01:15-01:15 | Lift ram to vent, clean ram |
| 01:15-02:15 | Addition of a) - c)<br>a) add N330 to the pouch with Vivatec 500; add mixture to the kneader |
| | b) 1/2 silica |
| | c) Protektor G 3108; Vulkanox HS/LG; Vulkanox 4020/LG<br>Close ram and mix for 60 s |
| 02:15-02:15 | Lift ram to vent, clean ram |
| 02:15 - 03:45 | Addition: ZnO RS RAL 844 C; Edenor ST1 GS;<br>Close ram and mix for 90 s; maintain temperature at 150°C optionally by varying mixer speed |
| 03:45 | Discharge mixture and check weight |
| | Form a milled sheet on a laboratory roller mill (2 roller calendars) for 45 s at a roller gap of 4 mm and finally discharge said sheet |
| | Cut weight for stage 2; storage time 24 h at 23°C |
| | |
| Stage 2 | GK 1.5 E, kneader fill factor 0.62; 75 rpm; kneader temperature: 75°C |
| min:se c | Desired mixing temperature: 145°C-155°C |
| 00:00-01:00 | Add mixture from stage 1; close ram and plastify for 60 s |
| 01:00-03:00 | Add Rhenogran DPG-80; close ram and mix for 120 s, while keeping the mixing temperature at 150°C, if necessary by correcting the speed |
| 03:00 | Discharge mixture and check weight |
| | Form a milled sheet on a laboratory roller mill (2 roller calendars) for 45 s at a roller gap of 4 mm and finally discharge said sheet |
| | Cut weight for stage 2; storage time 24 h at 23°C |
| | |
| Stage 3 | GK 1.5 E, kneader fill factor 0.59; 50 rpm; kneader temperature: 50°C |
| min:se c | Desired mixing temperature: < 110 °C |
| 00:00-02:00 | Add mixture from stage 2; Richon TBZTD-OP; Vulkacit CZ/EG-C; sulfur; close ram and mix for 120 s |
| 02:00 | Discharge mixture; form a milled sheet on a laboratory roll mill (2 roll calenders) for 20 s at a roll nip of 3 - 4 mm |

(continued)

| | |
|---|---|
| Stage 3 | GK 1.5 E, kneader fill factor 0.59; 50 rpm; kneader temperature: 50°C |
| | With roll nip 3 mm, cut into the sheet 3 x from the left and tum the sheet over each time, then cut in 3 x from the right and turn the sheet over each time. |
| | Roll up sheet and fold over through a 3 mm roll nip; repeat this operation 3 times; discharge final sheet. |

The test specimens and sheets are vulcanized at a temperature of 165°C in a typical vulcanizing press with a holding pressure of 130 bar. The vulcanization time for the mixtures is 20 minutes.

Rubber testing is effected in accordance with the test methods specified in Table 5.

Table 5: Test methods

| Test/method | Raw mixture Vulcanizate | Physical parameter and unit | Test conditions | Testing according to |
|---|---|---|---|---|
| Reinforcement index from tensile test, defined as the product of the factors of 300% stress value and maximum elongation at break | V | 300% stress value / MPa; elongation at break / % gives the reinforcement index / MPa * % | Test at 23°C: Standard bar S1; Takeoff speed: 500 mm / min | DIN 53504, ISO 37 |
| Dispersion by means of topography: Total of the areas under the peaks (measure of roughness) in % of the scanned area; Number of defects on account of undispersed particles | V | Peak area (TOPO) / %; Number of peaks detected in the height interval of 2 µm - 80 µm (TOPO) | The lower the respective value, the better the dispersion | In accordance with ASTM D 2663; described in DE 199 17 975 C2 Determination by means of a topographic method, described in: "Entwicklung eines Verfahrens zur Charakterisier ung der Füllstoffdisper sion in Gummimischu ngen mittels einer Oberflächento pographie" [Development of a Method of Characterizing Filler Dispersion in Rubber Mixtures by Means of Surface Topography] A. Wehmeier; Diplom thesis 1998 at Münster University of Applied Sciences, Steinfurt campus, in the field of Chemical Engineering |
| Dispersion quality of the fillers in vulcanizates (%) DisperTester 3000 plus at 100-fold enlargement | V | White area / % | Work settings; the lower the value, the better the dispersion | ISO 11345: 2006; ASTM D 7723 |

The results of the rubber testing are shown in Table 6.

Table 6: Rubber-related results

| | | Comparative mixture 1 | Comparative mixture 2 | Comparative mixture 3 | Inventive mixture 1 | Inventive mixture 2 | Inventive mixture 3 | Inventive mixture 4 | Inventive mixture 5 | Inventive mixture 6 | Inventive mixture 7 |
|---|---|---|---|---|---|---|---|---|---|---|---|
| Peak area (TOPO) / % | % | 6.8 | 9.7 | 20.1 | 1.7 | 1.8 | 4.7 | 2.3 | 2.8 | 3.9 | 1.6 |
| Number of peaks detected in the height interval of 2 μm - 80 μm (TOPO) | -- | 182 | 180 | 372 | 46 | 57 | 106 | 90 | 74 | 132 | 60 |
| White area | % | 15.4 | 15.6 | 19.1 | 11.2 | 7.0 | 12.6 | 10.2 | 10.9 | 13.1 | 10.1 |
| Reinforcement index | MPa * % | 4313 | 4189 | 3924 | 4598 | 4350 | 4493 | 4502 | 4644 | 4357 | 4534 |

It is found that the silica according to the invention can achieve superior dispersion compared to the prior art. This in turn leads to excellent reinforcement characteristics reflected in the reinforcement index. The higher this index, the better the exploitation of the reinforcement potential of the respective silica.

**Example 10: Examination of rubber characteristics**

In a further mixing series, Comparative Example 4 and Inventive Example 2 were compared. For this purpose, these were mixed according to the mixing method in Table 4 and tested according to the test method described in Table 5. The formulations are presented in Table 7.

The test specimens and sheets are vulcanized at a temperature of 165°C in a typical vulcanizing press with a holding pressure of 130 bar. The vulcanization time for the mixtures is 15 minutes.

Table 7: Formulations of the rubber mixtures

| Name | Comparative mixture 4 | Inventive mixture 8 |
|---|---|---|
| Figures in | phr | phr |
| Stage 1 | | |
| Buna VSL 4526-2 | 96.25 | 96.25 |
| Buna CB 24 | 30.00 | 30.00 |
| Comparative Example 4 | 80.00 | 0.00 |
| Inventive Example 2 | 0.00 | 80.00 |
| Si 266 | 6.30 | 6.30 |
| N330 | 5.00 | 5.00 |
| ZnO RS RAL 844 C | 2.00 | 2.00 |
| Edenor ST1 GS | 2.00 | 2.00 |
| Vivatec 500 | 8.75 | 8.75 |
| Vulkanox HS/LG | 1.50 | 1.50 |
| Vulkanox 4020/LG | 2.00 | 2.00 |
| Protektor G 3108 | 2.00 | 2.00 |
| | | |
| Stage 2 | | |
| Mixture from stage 1 | | |
| Rhenogran DPG-80 | 2.50 | 2.50 |
| | | |
| Stage 3 | | |
| Mixture from stage 2 | | |
| Richon TBZTD-OP | 0.20 | 0.20 |
| Vulkacit CZ/EG-C | 1.60 | 1.60 |
| Sulfur | 2.00 | 2.00 |

Table 6: Rubber-related results for Example 10

| | | **Comparative mixture 4** | **Inventive mixture 8** |
|---|---|---|---|
| Peak area (TOPO) / % | % | 4.0 | 3.5 |
| Number of peaks detected in the height interval of 2 μm - 80 μm (TOPO) | -- | 81 | 66 |
| White area | % | 9.3 | 6.8 |

(continued)

| | | Comparative mixture 4 | Inventive mixture 8 |
|---|---|---|---|
| Reinforcement index | MPa * % | 4242 | 4612 |

Example 10 also shows that the silica according to the invention from Example 2 can achieve superior dispersion compared to the prior art. This in turn leads to excellent reinforcement characteristics reflected in the reinforcement index. The higher this index, the better the exploitation of the reinforcement potential of the respective silica.

## Claims

1. Precipitated silica, **characterized by** the following physicochemical parameters:

   CTAB 50 $m^2/g$ - 450 $m^2/g$,
   BET/CTAB ratio < 1.3,
   tailing factor 5% $\geq$ 150 nm.

2. Precipitated silica according to Claim 1, **characterized in that** the CTAB is 150 $m^2/g$-350 $m^2/g$.

3. Precipitated silica according to Claim 1, **characterized in that** the BET/CTAB ratio is 0.9-1.2.

4. Precipitated silica according to Claim 1, **characterized in that** the tailing factor 5% is 175-400 nm.

5. Precipitated silica according to Claim 1, **characterized in that** the CTAB is 150 $m^2/g$-350 $m^2/g$, the BET/CTAB ratio is 0.9-1.2 and the tailing factor 5% is 175-400 nm.

6. Process for producing the silica according to Claim 1, **characterized in that**

   a) an initial charge is created at a temperature of 60°C to 90°C by adding $H_2SO_4$ to water until a pH of less than 4 is established,
   b) waterglass and $H_2SO_4$ are simultaneously added to the initial charge at a pH of less than 4, using 3-55% of the total amount of the waterglass,
   c) the metered addition of $H_2SO_4$ is stopped,
   d) metered addition of waterglass is continued until a pH of 3-9 is established, then the addition of waterglass is stopped,
   e) the suspension is subjected to ageing by stirring for a further 5-90 min without further addition of $H_2SO_4$ or waterglass,
   f) waterglass and $H_2SO_4$ are metered in simultaneously, with the pH of the suspension greater than 8,
   g) the metered addition of waterglass is stopped after the entire amount of water glass has been added,
   h) metered addition of $H_2SO_4$ is continued until a pH of less than 5 is attained, then the addition of $H_2SO_4$ is stopped,
   i) the suspension is filtered and dried,

   wherein waterglass having an $SiO_2$ content of greater than 20% by weight and $H_2SO_4$ having a concentration of greater than 90% by weight are used, and stirring is permanent in process steps a) to h).

7. Process for producing the silica according to Claim 1, **characterized in that**

   a) an initial charge is created by addition of 5-50% by weight of the total amount of waterglass to water at a temperature of 45°C to 90°C,
   b) $H_2SO_4$ is added until a pH of less than 3 is attained, then the addition of $H_2SO_4$ is stopped,
   c) the suspension is subjected to ageing by stirring for a further 5-90 min without further addition of $H_2SO_4$ or waterglass,
   d) waterglass is metered in until a pH of 3-9 is established, then the addition of waterglass is stopped,
   e) the suspension is subjected to ageing by stirring for a further 5-90 min without further addition of $H_2SO_4$ or waterglass,

f) then 5-50% by weight of the total amount of waterglass is added, then the addition of waterglass is stopped.
g) the suspension is subjected to ageing by stirring for a further 5-90 min without further addition of $H_2SO_4$ or waterglass,
h) $H_2SO_4$ is added until a pH of less than 3 is attained, then the addition of $H_2SO_4$ is stopped,
i) the suspension is subjected to ageing by stirring for a further 5-90 min without further addition of $H_2SO_4$ or waterglass,
j) waterglass is metered in up to a pH of 3-9, then the addition of waterglass is stopped,
k) the suspension is subjected to ageing by stirring for a further 5-90 min without further addition of $H_2SO_4$ or waterglass,
l) then 5-50% by weight of the total amount of waterglass is added, then the addition of waterglass is stopped.
m) the suspension is subjected to ageing by stirring for a further 5-90 min without further addition of $H_2SO_4$ or waterglass,
n) $H_2SO_4$ is added until a pH of 7.5-9.0 is attained, then the addition of $H_2SO_4$ is stopped,
o) the suspension is optionally heated up to 85 to 95°C,
p) the suspension is subjected to ageing by stirring for a further 5-90 min without further addition of $H_2SO_4$ or waterglass,
q) $H_2SO_4$ is added until a pH of less than 5 is attained, then the addition of $H_2SO_4$ is stopped,
r) the suspension is filtered and dried,

wherein waterglass having an $SiO_2$ content of greater than 20% by weight and $H_2SO_4$ having a concentration of greater than 90% by weight are used, and stirring is permanent in process steps a) to g).

**8.** Use of the silicas according to Claim 1 in rubber mixtures, battery separator foils, silicone rubber mixtures, pharmaceutical applications, dental applications and cosmetic applications.

**9.** Use of the silicas according to Claim 1 as reinforcing agent, carrier, flatting agent and free-flow auxiliary.

**10.** Rubber mixtures, **characterized in that** they comprise at least one rubber and at least one precipitated silica according to Claim 1.

**Patentansprüche**

**1.** Fällungskieselsäure, **gekennzeichnet durch** die folgenden physikalisch-chemischen Parameter:

CTAB 50 $m^2/g$ - 450 $m^2/g$,
BET/CTAB-Verhältnis < 1,3,
Tailing-Faktor 5 % ≥ 150 nm.

**2.** Fällungskieselsäure nach Anspruch 1, **dadurch gekennzeichnet, dass** die CTAB 150 $m^2/g$-350 $m^2/g$ beträgt.

**3.** Fällungskieselsäure nach Anspruch 1, **dadurch gekennzeichnet, dass** das BET/CTAB-Verhältnis 0,9-1,2 beträgt.

**4.** Fällungskieselsäure nach Anspruch 1, **dadurch gekennzeichnet, dass** der Tailing-Faktor 5 % 175-400 nm beträgt.

**5.** Fällungskieselsäure nach Anspruch 1, **dadurch gekennzeichnet, dass** die CTAB 150 $m^2/g$-350 $m^2/g$ beträgt, das BET/CTAB-Verhältnis 0,9-1,2 beträgt und der Tailing-Faktor 5 % 175-400 nm beträgt.

**6.** Verfahren zur Herstellung der Kieselsäure nach Anspruch 1, **dadurch gekennzeichnet, dass** man

a) bei einer Temperatur von 60 °C bis 90 °C eine Vorlage durch Zugabe von $H_2SO_4$ zu Wasser, bis sich ein pH-Wert von weniger als 4 einstellt, erstellt,
b) simultan Wasserglas und $H_2SO_4$ bei einem pH-Wert kleiner 4 zur Vorlage zugibt, wobei 3-55 % der Gesamtmenge des Wasserglases eingesetzt werden,
c) die Dosierung von $H_2SO_4$ stoppt,
d) Wasserglas weiter zudosiert, bis sich ein pH-Wert von 3-9 einstellt, danach die Zugabe von Wasserglas stoppt,
e) die Suspension einer Alterung unterzieht, indem man ohne weitere Zugabe von $H_2SO_4$ oder Wasserglas für weitere 5-90 min rührt,

f) simultan Wasserglas und $H_2SO_4$ zudosiert, wobei der pH-Wert der Suspension größer als 8 ist,
g) die Dosierung von Wasserglas nach Zugabe der Gesamtmenge an Wasserglas stoppt,
h) $H_2SO_4$ weiter zudosiert, bis sich ein pH-Wert kleiner 5 einstellt, danach die $H_2SO_4$-Zugabe stoppt,
i) die Suspension filtriert und trocknet,

wobei man Wasserglas mit einem $SiO_2$-Gehalt größer 20 Gew.-% und $H_2SO_4$ mit einer Konzentration größer 90 Gew.-% einsetzt und in den Verfahrensschritten a) bis h) permanent rührt.

**7.** Verfahren zur Herstellung der Kieselsäure nach Anspruch 1, **dadurch gekennzeichnet, dass** man

a) eine Vorlage durch Zugabe von 5-50 Gew.-% der Gesamtmenge an Wasserglas zu Wasser bei einer Temperatur von 45 °C bis 90 °C erstellt,
b) $H_2SO_4$ zugibt, bis sich ein pH-Wert kleiner 3 einstellt, dann die Zugabe von $H_2SO_4$ stoppt,
c) die Suspension einer Alterung unterzieht, indem man ohne weitere Zugabe von $H_2SO_4$ oder Wasserglas für weitere 5-90 min rührt,
d) Wasserglas zudosiert, bis sich ein pH-Wert von 3-9 einstellt, danach die Zugabe von Wasserglas stoppt,
e) die Suspension einer Alterung unterzieht, indem man ohne weitere Zugabe von $H_2SO_4$ oder Wasserglas für weitere 5-90 min rührt,
f) anschließend 5-50 Gew.-% der Gesamtmenge an Wasserglas zugibt, danach die Zugabe von Wasserglas stoppt,
g) die Suspension einer Alterung unterzieht, indem man ohne weitere Zugabe von $H_2SO_4$ oder Wasserglas für weitere 5-90 min rührt,
h) $H_2SO_4$ zugibt, bis sich ein pH-Wert kleiner 3 einstellt, danach die $H_2SO_4$-Zugabe stoppt,
i) die Suspension einer Alterung unterzieht, indem man ohne weitere Zugabe von $H_2SO_4$ oder Wasserglas für weitere 5-90 min rührt,
j) Wasserglas zudosiert bis zu einem pH-Wert von 3-9, danach die Zugabe von Wasserglas stoppt,
k) die Suspension einer Alterung unterzieht, indem man ohne weitere Zugabe von $H_2SO_4$ oder Wasserglas für weitere 5-90 min rührt,
l) anschließend 5-50 Gew.-% der Gesamtmenge an Wasserglas zugibt, danach die Zugabe von Wasserglas stoppt,
m) die Suspension einer Alterung unterzieht, indem man ohne weitere Zugabe von $H_2SO_4$ oder Wasserglas für weitere 5-90 min rührt,
n) $H_2SO_4$ zugibt, bis sich ein pH-Wert von 7,5-9,0 einstellt, danach die $H_2SO_4$-Zugabe stoppt,
o) gegebenenfalls die Suspension auf 85 bis 95 °C aufheizt,
p) die Suspension einer Alterung unterzieht, indem man ohne weitere Zugabe von $H_2SO_4$ oder Wasserglas für weitere 5-90 min rührt,
q) $H_2SO_4$ zugibt, bis sich ein pH-Wert kleiner 5 einstellt, danach die $H_2SO_4$-Zugabe stoppt,
r) die Suspension filtriert und trocknet,

wobei man Wasserglas mit einem $SiO_2$-Gehalt größer 20 Gew.-% und $H_2SO_4$ mit einer Konzentration größer 90 Gew.-% einsetzt und in den Verfahrensschritten a) bis g) permanent rührt.

**8.** Verwendung der Kieselsäuren nach Anspruch 1 in Kautschukmischungen, Batterieseparatorfolien, Silikonkautschukmischungen, pharmazeutischen Anwendungen, Dentalanwendungen und kosmetischen Anwendungen.

**9.** Verwendung der Kieselsäuren nach Anspruch 1 als Verstärkungsmittel, Träger, Mattierungsmittel und Free-Flow-Hilfsmittel.

**10.** Kautschukmischungen, **dadurch gekennzeichnet, dass** sie mindestens einen Kautschuk und mindestens eine Fällungskieselsäure nach Anspruch 1 enthalten.

## Revendications

**1.** Silice précipitée, **caractérisée par** les paramètres physico-chimiques suivants :

CTAB 50 $m^2/g$ - 450 $m^2/g$,
rapport BET/CTAB < 1,3,

facteur d'étalement 5 % ≥ 150 nm.

**2.** Silice précipitée selon la revendication 1, **caractérisée en ce que** le CTAB est de 150 $m^2$/g-350 $m^2$/g.

**3.** Silice précipitée selon la revendication 1, **caractérisée en ce que** le rapport BET/CTAB est de 0,9-1,2.

**4.** Silice précipitée selon la revendication 1, **caractérisée en ce que** le facteur d'étalement 5 % est de 175-400 nm.

**5.** Silice précipitée selon la revendication 1, **caractérisée en ce que** le CTAB est de 150 $m^2$/g-350 $m^2$/g, le rapport BET/CTAB est de 0,9-1,2, et le facteur d'étalement 5 % est de 175-400 nm.

**6.** Procédé de production de la silice selon la revendication 1, **caractérisé en ce que**

a) on crée une charge initiale à une température de 60 °C à 90 °C par ajout de $H_2SO_4$ à de l'eau jusqu'à établissement d'un pH inférieur à 4,
b) on ajoute à la charge initiale à pH inférieur à 4, simultanément, du verre soluble et du $H_2SO_4$, en utilisant 3-55 % de la quantité totale du verre soluble,
c) on arrête l'ajout dosé de $H_2SO_4$,
d) on poursuit l'ajout dosé de verre soluble jusqu'à établissement d'un pH de 3-9, puis on arrête l'ajout de verre soluble,
e) on soumet la suspension à un vieillissement par agitation pendant 5-90 min supplémentaires sans ajout supplémentaire de $H_2SO_4$ ou de verre soluble,
f) on ajoute simultanément du verre soluble et du $H_2SO_4$, avec le pH de la suspension supérieur à 8,
g) on arrête l'ajout dosé de verre soluble après que toute la quantité de verre soluble a été ajoutée,
h) on poursuit l'ajout dosé de $H_2SO_4$ jusqu'à atteindre un pH inférieur à 5, puis on arrête l'ajout de $H_2SO_4$,
i) on filtre et sèche la suspension,

dans lequel on utilise du verre soluble ayant une teneur en $SiO_2$ supérieure à 20 % en poids et du $H_2SO_4$ ayant une concentration supérieure à 90 % en poids, et l'agitation est permanente dans les étapes de procédé a) à h).

**7.** Procédé de production de la silice selon la revendication 1, **caractérisé en ce que**

a) on crée une charge initiale par ajout de 5-50 % en poids de la quantité totale de verre soluble à de l'eau à une température de 45 °C à 90 °C,
b) on ajoute du $H_2SO_4$ jusqu'à atteindre un pH inférieur à 3, puis on arrête l'ajout de $H_2SO_4$,
c) on soumet la suspension à un vieillissement par agitation pendant 5-90 min supplémentaires sans ajout supplémentaire de $H_2SO_4$ ou de verre soluble,
d) on ajoute du verre soluble jusqu'à établissement d'un pH de 3-9, puis on arrête l'ajout de verre soluble,
e) on soumet la suspension à un vieillissement par agitation pendant 5-90 min supplémentaires sans ajout supplémentaire de $H_2SO_4$ ou de verre soluble,
f) puis on ajoute 5-50 % en poids de la quantité totale de verre soluble, puis on arrête l'ajout de verre soluble.
g) on soumet la suspension à un vieillissement par agitation pendant 5-90 min supplémentaires sans ajout supplémentaire de $H_2SO_4$ ou de verre soluble,
h) on ajoute du $H_2SO_4$ jusqu'à atteindre un pH inférieur à 3, puis on arrête l'ajout de $H_2SO_4$,
i) on soumet la suspension à un vieillissement par agitation pendant 5-90 min supplémentaires sans ajout supplémentaire de $H_2SO_4$ ou de verre soluble,
j) on ajoute du verre soluble jusqu'à un pH de 3-9, puis on arrête l'ajout de verre soluble,
k) on soumet la suspension à un vieillissement par agitation pendant 5-90 min supplémentaires sans ajout supplémentaire de $H_2SO_4$ ou de verre soluble,
l) puis on ajoute 5-50 % en poids de la quantité totale de verre soluble, puis on arrête l'ajout de verre soluble,
m) on soumet la suspension à un vieillissement par agitation pendant 5-90 min supplémentaires sans ajout supplémentaire de $H_2SO_4$ ou de verre soluble,
n) on ajoute du $H_2SO_4$ jusqu'à atteindre un pH de 7,5-9,0, puis on arrête l'ajout de $H_2SO_4$,
o) on chauffe éventuellement la suspension jusqu'à 85 à 95 °C,
p) on soumet la suspension à un vieillissement par agitation pendant 5-90 min supplémentaires sans ajout supplémentaire de $H_2SO_4$ ou de verre soluble,
q) on ajoute du $H_2SO_4$ jusqu'à atteindre un pH inférieur à 5, puis on arrête l'ajout de $H_2SO_4$,
r) on filtre et sèche la suspension,

dans lequel on utilise du verre soluble ayant une teneur en $SiO_2$ supérieure à 20 % en poids et du $H_2SO_4$ ayant une concentration supérieure à 90 % en poids, et l'agitation est permanente dans les étapes de procédé a) à g).

**8.** Utilisation des silices selon la revendication 1 dans des mélanges de caoutchouc, des feuilles de séparateur de batterie, des mélanges de caoutchouc de silicone, des applications pharmaceutiques, des applications dentaires et des applications cosmétiques.

**9.** Utilisation des silices selon la revendication 1 en tant qu'agent de renforcement, support, agent d'aplatissement et auxiliaire d'écoulement libre.

**10.** Mélanges de caoutchouc, **caractérisés en ce qu'**ils comprennent au moins un caoutchouc et au moins une silice précipitée selon la revendication 1.

Figure 1

Relative
weight
Peak
100%
5%
Breadth of the
distribution at 5% peak height
Particle size in nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1585704 A
- EP 1764344 A
- EP 2473443 A
- EP 2794479 B1
- US 20170044020 A1
- EP 1764344 B1
- WO 2004014797 A
- WO 2004014795 A
- WO 2004065299 A
- EP 2794479 A
- DE 19917975 C2


### Non-patent literature cited in the description


- **W. HOFMANN**. Rubber Technology Handbook. Hanser Verlag, 1994
- Entwicklung eines Verfahrens zur Charakterisier ung der Füllstoffdisper sion in Gummimischu ngen mittels einer Oberflächento pographie. **A. WEHMEIER**. Development of a Method of Characterizing Filler Dispersion in Rubber Mixtures by Means of Surface Topography